(19) Europäisches Patentamt
European Patent Office
Office européen des brevets

(11) EP 1 672 412 A2

(12) **EUROPEAN PATENT APPLICATION**

(43) Date of publication:
21.06.2006 Bulletin 2006/25

(51) Int Cl.:
*G02F 1/1335* (2006.01) *G02F 1/139* (2006.01)

(21) Application number: 05026530.5

(22) Date of filing: 05.12.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 06.12.2004 JP 2004353401

(71) Applicant: CANON KABUSHIKI KAISHA
Ohta-ku, Tokyo (JP)

(72) Inventor: Asao, Yasufumi
Tokyo (JP)

(74) Representative: TBK-Patent
Bavariaring 4-6
80336 München (DE)

(54) **Color liquid crystal display device**

(57) A hybrid color liquid crystal display device includes a liquid crystal layer in which liquid crystal molecules are aligned homeotropically with respect to a pair of substrates under no voltage application and includes a phase plate having an optical axis in a direction perpendicular to a substrate surface. The phase plate has a refractive index which is larger in an in-plane direction of substrate than in a direction normal to the substrate surface, and has a retardation smaller than a retardation of the liquid crystal layer in terms of an absolute value, thereby to suppress a change in color depending on a viewing angle.

**60**

**FIG.1**

EP 1 672 412 A2

**Description**

FIELD OF THE INVENTION AND RELATED ART

The present invention relates to a color liquid crystal display device, such as a reflection-type color liquid crystal display device or a transflective-type color liquid crystal display device, particularly a color liquid crystal display device using a phase plate, and also relates to a liquid crystal display apparatus.

At present, a flat-panel display has widely been popularized as various monitors for a personal computer and the like and as a display device for a cellular phone, and so on. In the future, the flat-panel display is expected to follow popularization more and more, such as development in use for big-screen television.

A most popular flat-panel display is a liquid crystal display. As a color display method for the liquid crystal display, one called a micro-color filter method has been used widely.

The micro-color filter method effects full-color display by constituting one unit pixel with at least three subpixels and providing the three subpixels with color filters of three primary colors of red (R), green (G), and blue (B), respectively, thus having an advantage of readily realizing a high color-reproducing performance. However, as a disadvantage of the micro-color filter method, a transmittance is 1/3 of a monochromatic display method, so that a light utilization efficiency is low.

This low light utilization efficiency leads to a high power consumption of a back light or a front light, as an auxiliary light source, in a transmission-type liquid crystal display apparatus having the back light or a reflection-type liquid crystal display apparatus having the front light. Further, in a reflection-type liquid crystal display apparatus using no auxiliary light source, the low light utilization efficiency is fatal to the display apparatus, so that such a color display apparatus has been little used currently.

On the other hand, a color display mode utilizing electrically controlled birefringence mode (hereinafter referred to as "ECB color mode") has been extensive studied principally in the 1970s. By using the ECB color mode, it is possible to effect color display based on interference colors, so that bright color display can be effected without forming a color filter.

In the ECB color mode, however, there are many disadvantages such that high-purity red display cannot be effected and that a viewing angle characteristic is very poor. For these reasons, in the 1980s or later, the ECB color mode has been substantially replaced with the micro-color filter method. As a result, at present, the ECB color mode liquid crystal display device has been little used.

In order to solve the above described problems of the color filter method and the ECB color mode, the present invention has proposed a new display principle as described in International Publication No. WO2004/042687. According to this display principle, by using the ECB color mode and the color filter method in combination, it is possible to realize a bright display apparatus since the light utilization efficiency is increased compared with a conventional RGB color filter method.

Hereinbelow, such a hybrid-type color display method using a coloring phenomenon based on the birefringence effect and a color filter in combination is referred to as a "hybrid color liquid crystal mode (method)".

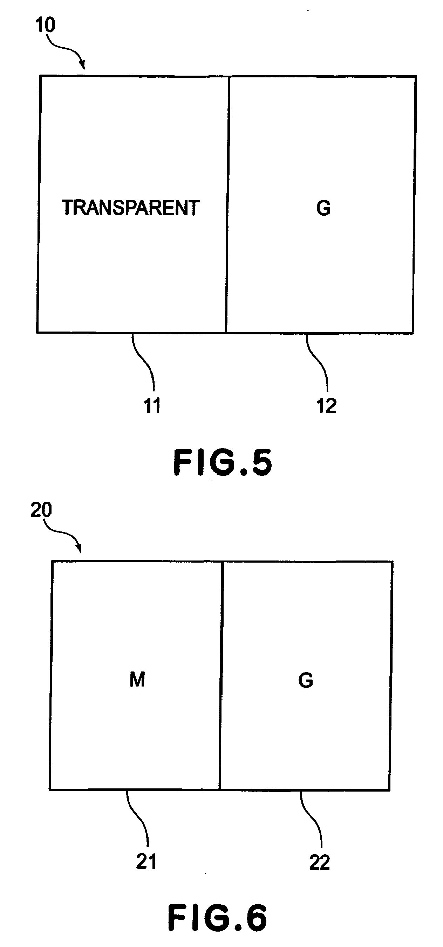

A display principle of the hybrid color liquid crystal mode will be described. This mode include various applied and modified embodiments as described in the above described International Publication No. WO2004/042687. Herein, of these embodiments, a basic embodiment and two modified embodiments will be described with reference to Figures 5 to 9.

(Basic Embodiment)

Figure 5 is a schematic view showing a pixel constitution of the hybrid color liquid crystal mode-liquid crystal display device. In the liquid crystal display device, as shown in Figure 5, one pixel 10 is divided into a plurality of subpixels 11 and 12 (two subpixels in this embodiment). At one subpixel 12, a green color filter G is disposed. At the other subpixel 52, by adjusting a retardation, a change in luminance of achromatic color from black to white and display of any chromatic color from red to blue through magenta are achieved. More specifically, a unit pixel is constituted by a first subpixel 11 at which chromatic color is displayed by changing the retardation of the liquid crystal layer under voltage application and a second subpixel 12 at which the color filter is provided and the color (green) of the color filter is displayed by changing the retardation in a brightness change range through voltage application. At the subpixel for displaying green having a high luminosity factor, the green color filter G is used without utilizing an ECB-based coloring phenomenon. Further, the ECB-based coloring phenomenon is utilized for only red and blue.

For example, the subpixel 12 provided with the green color filter (hereinafter referred to as "G subpixel") is placed in the dark state and the subpixel 11 provided with no color filter (hereinafter referred to as "transparent subpixel") is placed in the white (bright) state (a maximum luminance state in a change area of achromatic color), whereby it is possible to display white at the subpixels as a whole.

Alternatively, it is also possible to place the G subpixel 12 in a maximum transmission state and place the transparent subpixel 11 in a magenta (display) state in the chromatic color area. The magenta includes both red (R) and blue (B), so that it is possible to attain white display as the result of color composition.

In order to provide the single color of green (G), the G subpixel 12 is placed in the maximum transmission state and the transparent subpixel 11 is placed in the dark state. In order to provide the single color of red (R) (or blue (B)), the G subpixel 12 is placed in the dark state and a retardation of the transparent subpixel 11 is adjusted to provide red (or blue). For example, in the case where a transmission-type liquid crystal display device interposed between a pair of cross-nicol polarizers, the retardation may be adjusted to 450 nm (or 600 nm).

By using the above methods in combination, it is also possible to obtain mixed color of R and G or B and G.

Both at the G subpixel 12 and the transparent subpixel 11, it is possible to effect black display by providing these subpixels with a retardation of zero to be placed in the dark state. Incidentally, in the case of a reflection-type liquid crystal display device using a single polarizer, retardation values are 1/2 of those described herein.

In the constitution, at the G subpixel 12, the retardation is changed in the range of 0 - 250 nm and at the transparent subpixel 11, the retardation is changed both in the range of 0 - 250 nm and the range of 450 - 600 nm. At both the subpixels, the liquid crystal material is ordinarily used in common, so that a drive voltage range is set to be different between the subpixels.

Further, in this constitution, as a result of selection of the green color filter, it is possible to obviate production of green through adjustment of retardation. Here, a retardation providing green is about 1300 nm, so that it is a very large value, thus being disadvantageous for production and characteristic. However, by using this method employing the green color filter, it is not necessary to use such a large retardation value. Further, green has a high luminosity factor, so that a high purity color is produced by the green color filter to improve an image quality.

By using the above described constitution, it is unnecessary to provide an excessively large cell thickness compared with an ordinarily used liquid crystal display device. For example, in the case of the transmission-type liquid crystal display device, red corresponds to the retardation of 450 nm and blue corresponds to the retardation of 600 nm, so that the liquid crystal display device used is only required to have a cell thickness so as to realize the retardation of 600 nm. In the case of the conventional liquid crystal display device using RGB color filters, a retardation required to effect white/black display is about 250 nm, so that the cell thickness required in this display mode (hybrid color liquid crystal mode) is about 10 $\mu$m which is about two times the conventional cell thickness.

It is generally said that a response speed is proportional to the square of the cell thickness. However, a response speed of several multi-seconds is being realized by progress of recent drive technology, so that even when the response speed in the hybrid color liquid crystal mode is about four times that in the recent drive technique, it becomes possible to effect motion picture display although blur is somewhat caused to occur.

Further, in the case where the above described constitution is applied to a reflection-type liquid crystal display device, the cell thickness is 1/2 of that of the above described liquid crystal display device, so that the response speed is 1/4 of that of the above described liquid crystal display device. As a result, the reflection-type liquid crystal display device is capable of effecting motion picture display at a level of practically no problem.

Further, a color reproduction range of green is determined by the color filter and green has the high luminosity factor, so that it becomes possible to realize a high color reproducibility without sacrificing a transmittance of a white component.

(Modified Embodiment 1)

In the above described basic embodiment, it is possible to provide the first sub-pixel to be colored by the retardation change with a color filter of color, such as magenta, complementary to green.

A pixel constitution in this modified embodiment of the basic embodiment is shown in Figure 6. A G subpixel 22 is provided with a green color filter similarly as in the basic embodiment. Further, a first subpixel 21, which is transparent in the basic embodiment, is provided with a magenta color filter M. At a second sub-pixel (G pixel) 22, similarly as in the above described basic embodiment, modulation is performed in a brightness change modulation range to change the brightness of green, and at the first subpixel 21, modulation is performed in a hue change modulation range to display chromatic color and modulation is performed in the brightness change modulation range to effect display of changing the brightness of magenta.

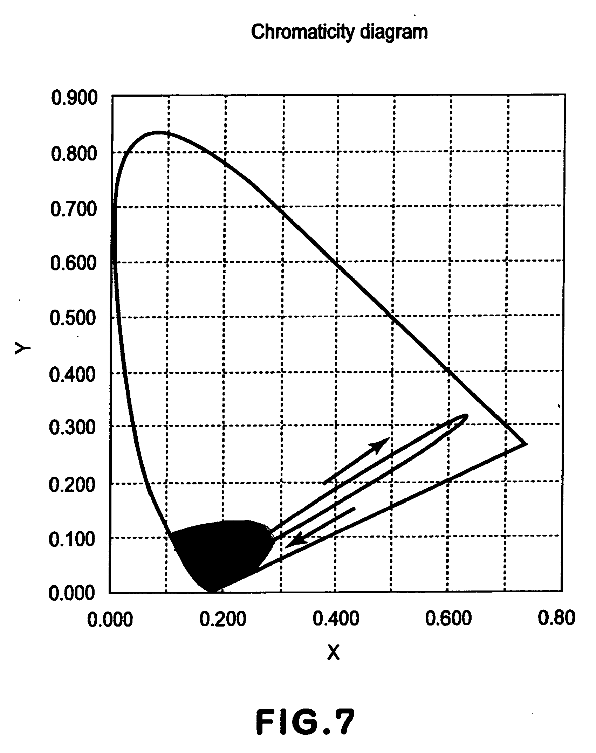

Figure 7 shows calculated values with respect to a change in color by retardation in the case where an ideal magenta color filter which provides a transmittance of zero in a wavelength range of 480 - 580 nm and a transmittance of 100 % in other ranges. As shown in Figure 7, as the retardation amount at the first subpixel is increased from zero, such a brightness change that the display state is changed from the black state to a bright magenta state via a dark magenta state (halftone magenta state) is achieved. Thereafter, when the retardation amount is further increased and exceeds a retardation value providing white in the case where the color filter is not used, a continuous change in chromatic color in the order of magenta, red, reddish violet (magenta), violet and blue is achieved.

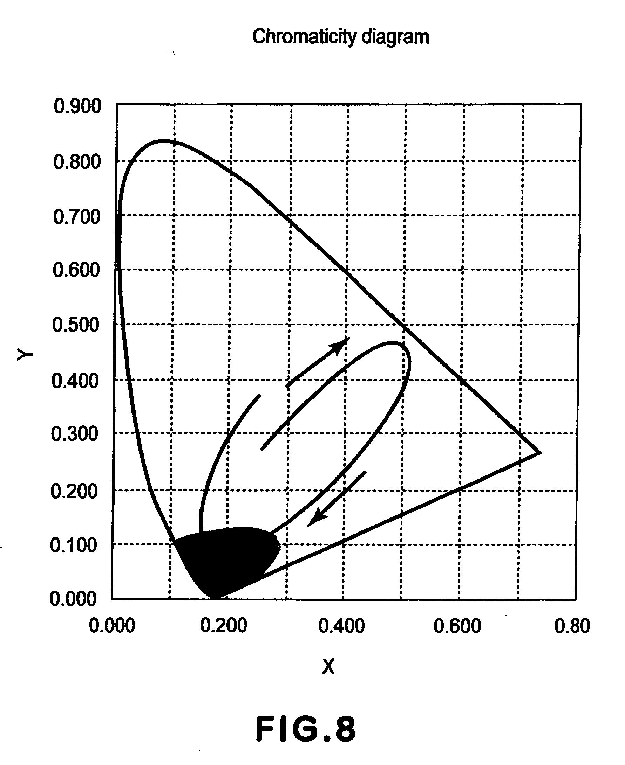

Incidentally, when Figure is compared with Figure 8 showing calculated values in the case where the color filter is not used, the range of change in chromaticity is extended near to pure colors of red and blue (located corners of chromaticity diagram), so that it is found that the color reproduction ranges of red and blue are extended by providing the magenta color filter. Further, the change from red to blue is moved along the lower side (of color triangle), so that it is also found that a continuous change in color mixture from red to blue is achieved. In this manner, it is possible to enlarge the color reproduction ranges of red and blue by providing the magenta color filter at the first subpixel and achieve the continuous change in intermediary color when the retardation is changed.

In order to display white in this modified embodiment, the same retardation value (250 nm) providing a maximum transmittance is set both at the magenta subpixel 21 and the G subpixel 22. Alternatively, it is also possible to place the G subpixel 22 in the maximum transmittance state (retardation value: 250 nm) and the magenta subpixel 21 in an intermediary state between red and blue (retardation value is about 550 nm). In the former case, in order to change the brightness of achromatic color, the retardation of magenta subpixel is changed with the retardation of the green color filter subpixel so that their gradation levels are changed together.

The cases of displaying black, the single chromatic color of RGB, and the mixed colors of these colors are the same as in the basic embodiment described above.

As described above, by using the color filter of color, such as magenta, which is complementary to green, it is possible to represent gradation of the color complementary to green together with gradation representation of achromatic color, so that the number of displayable colors can be remarkably increased.

Further, the magenta color filter permits transmission of both of red and blue, so that it is possible to effect bright display compared with the conventional method using the red color filter and the blue color filter in combination.

(Modified Embodiment 2)

In the liquid crystal display device shown in Figure 5, at the green subpixel having a high luminosity characteristic, it is possible to effect continuous gradation display but at the transparent subpixel, the chromatic color states, i.e., blue and red, utilize the ECB-based coloring phenomenon, so that the range is such a range that the hue is changed by a voltage. This ECB color range is such a range that not only the hue is changed but also the brightness is somewhat changed, so that it is possible to effect simulated gradation display by utilizing the brightness change in a range in which the hue change is not visually concerned even within the above range. However, the gradation display in terms of strict meaning cannot be effected.

The number of gradation levels of the display color by the ECB-based coloring effect is limited only to two values of bright and dark states but when compared with the case of using the conventional RGB color filter method, it is possible to decrease the number of subpixels required for one pixel from three to two. As a result, when the number of driver ICs is identical, the number of effective pixels in the case of using the ECB-based coloring effect is 1.5 times that in the case of using the conventional RGB color filter method, so that display with a high resolution can be effected. Alternatively, in order to obtain the same number of pixels, it is possible to decrease the number of required IC drivers, so that it is possible to prepare a panel at low costs. Further, from the viewpoint of aperture ratio, the case of using the ECB-based coloring effect is advantageous since it requires a smaller number of subpixels.

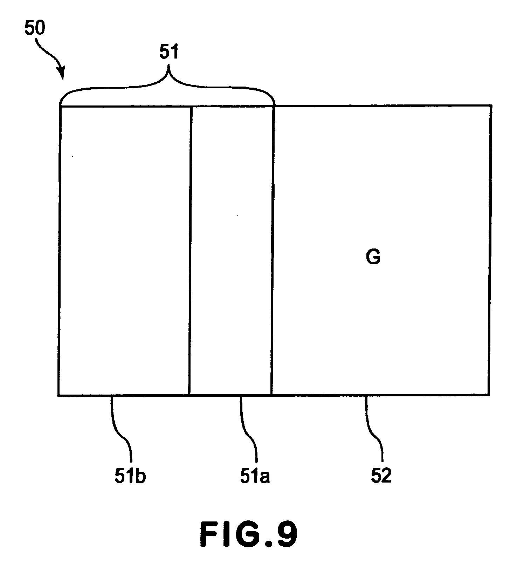

Figure 9 shows one pixel structure which is improved in the number of gradation levels compared with that shown in Figure 5, wherein the transparent subpixel 51 of a pixel 50 is divided into a plurality (two) of subpixels 51a and 51b to have different areas, whereby gradation is displayed in a digital manner.

The subpixels have different areas, so that some intermediary color levels can be displayed depending on the area of subpixel to be turned on for displaying corresponding color.

When there are N subpixels in this case, it is possible to obtain a gradation display characteristic with high linearlity by dividing the N subpixels into a plurality of portions of at an areal ratio of $1:2:....:2^{N-1}$. Incidentally, in the embodiment shown in Figure 9, N = 2.

In the liquid crystal display device of this embodiment, digital gradation is used for only red and blue which have a low luminosity characteristic. At the green subpixel, continuous modulation is performed in the retardation range of 0 - 250 nm, whereby continuous gradation levels can be displayed. For this reason, human's eyes do not feel that a gradation characteristic is largely impaired, so that it is possible to obtain a relatively good color image. In other words, it becomes possible to provide a sufficient characteristic even at the limited number of gradation levels by using the digital gradation for only red and blue which have a small number of gradation levels detectable by human's eyes. As in this modified embodiment, in order to provide a sufficient gradation characteristic with limited gradation levels, a pixel pitch may preferably be small. More specifically, from the viewpoint of such a resolution that a human cannot recognize the pixel, the pixel pitch may preferably be not more than 200 μm. According to the above described display method, it is possible to realize a bright liquid crystal display device which has a high light utilization efficiency and is capable of effecting visually full-color display.

On the other hand, such a transparent-type liquid crystal display device having a light-reflection area as a part thereof and a light-transmission area as another part thereof has been widely used in mobile phones, portable information terminals, etc. Particularly, a portable electronic apparatus is frequently used outdoors, so that it is required to ensure high display qualities, such as a sufficient viewability (visibility) even in very bright external light and a high contrast and a good color reproducibility even in a dark room.

Incidentally, as described above, the RGB color filter-type color liquid crystal display device sacrifices brightness but is considerably improved in display characteristics, such as response speed and a contrast, in recent years, thus being widely popularized. Of these display characteristics, a viewing angle characteristic is particularly studied extensively in various fields. As a result, the viewing angle characteristic is remarkably improved by optimization of a viewing angle compensation film, so that there is presently no problem.

On the other hand, in the hybrid color liquid crystal mode, the birefringence-based color display principle is utilized, so that such a problem that the display color depends on the viewing angle has been left standing.

In an ordinary liquid crystal display using a vertical alignment (VA) mode, in order to solve the problem of viewing angle dependency, such a method that an amount of birefringence of liquid crystal under voltage application is completely compensated by inserting a so-called negative C plate (described later in detail) to provide an optically isotropic state has been proposed and widely used.

However, according to study of the present invention, when such a compensation film (plate) is applied to the hybrid color liquid crystal mode so as to provide the optically isotropic state, it has been clarified that the resultant viewing angle characteristic is rather worsen.

## SUMMARY OF THE INVENTION

An object of the present invention is to provide a color liquid crystal display device capable of providing high display qualities and a wide viewing angle characteristic.

According to an aspect of the present invention, there is provided a color liquid crystal display device, comprising:

a polarizer;
a first phase plate;
first and second substrates, disposed opposite to each other, each provided with an electrode;
a liquid crystal layer comprising liquid crystal molecules; and
a plurality of pixels each comprising a first subpixel for displaying chromatic color by changing an in-plane retardation of said liquid crystal layer depending on an applied voltage and a second subpixel, provided with a color filter, for displaying color of the color filter by changing an in-plane retardation in a brightness change range depending on the applied voltage;

wherein the first phase plate has an optical axis perpendicular to a substrate surface; a refractive index in a direction normal to the substrate surface smaller than a refractive index in an in-plane direction; and an out-of-plane retardation in terms of an absolute value between an out-of-plane retardation of the liquid crystal layer of the first or the second subpixel when the pixel is in a minimum-brightness state and an out-of-plane retardation of the liquid crystal layer of the first or the second subpixel when the pixel is in a color-displaying state.

In the color liquid crystal display device of the present invention, the phase plate has an optical path (length) longer in the substrate in-plane direction than in the substrate normal direction and an absolute value of the difference in optical path is smaller than an absolute value of the liquid crystal layer. As a result, it is possible to provide the color liquid crystal display device with high display qualities and a wide viewing angle characteristic.

These and other objects, features and advantages of the present invention will become more apparent upon a consideration of the following description of the preferred embodiments of the present invention taken in conjunction with the accompanying drawings.

## BRIEF DESCRIPTION OF THE DRAWINGS

Figure 1 is a schematic sectional view showing a structure of a reflection-type liquid crystal display device as an embodiments of a color liquid crystal display device according to the present invention use din a color liquid crystal display apparatus.

Figures 2(a) and 2(b) are schematic views for illustrating a concept of a C plate constituting the reflection-type liquid crystal display device.

Figures 3(a) and 3(b) are graphs showing results of study on a relationship among a viewing angle, a color difference, and a retardation value of a C plate providing a minimum color difference in Example 2 of the present invention.

Figure 4 is a schematic sectional view showing a structure of a transflective-type liquid crystal display device provided with a backlight according to Example 4 of the present invention.

Figures 5 and 6 are schematic views each showing an embodiment of a pixel structure of one pixel (unit pixel) of a conventional liquid crystal display device.

Figure 7 is a chromaticity diagram showing a change in color when a retardation is changed in the case where a magenta color filter is provided in the conventional liquid crystal display device.

Figure 8 is a chromaticity diagram showing a change in color when a retardation is changed in the case where the magenta color filter is not provided in the conventional liquid crystal display device.

Figure 9 is a schematic view showing another embodiment of a pixel structure of one pixel (unit pixel) of the conventional liquid crystal display device.

## DETAILED DESCRIPTION OF THE PREFERRED EMBODIMENTS

Hereinbelow, embodiments of the present invention will be described more specifically with reference to the drawings.

Light incident obliquely into a liquid crystal layer is optically modulated in a manner different from that of vertical incident light. This is generally referred to as a viewing angle characteristic and is a large factor determining a display quality of a liquid crystal display. One reason of an occurrence of the viewing angle characteristic is that the liquid crystal layer has different refractive indices between in a direction perpendicular (normal) to substrates and in an in-plane direction of the substrates. The vertical incident light is not affected by the refractive index in the direction perpendicular to the substrates, but the oblique incident light has a component in the direction perpendicular to the substrate, so that it is affected by the component when the refractive index in the in-plane direction of the substrates and the refractive index in the direction perpendicular to the substrates are different from each other. As a result, the oblique incident light is emitted as light in a polarized state different from that of the vertical incident light. Herein, with respect to retardations of the liquid crystal layer and the phase plate, a product of a thickness of the liquid crystal layer (or the phase plate) and a difference in refractive index between in the in-plane direction and the normal (perpendicular) direction with respect to the substrates is referred to as an "out-of-plane retardation" or simply as a "retardation". In the case where the refractive index in the in-plane direction is different depending on viewing a direction (or azimuth), a direction including a light incident surface is taken as the viewing direction and a product of a thickness of the liquid crystal layer (or the phase plate) and a difference in refractive index in the viewing direction between the in-plane refractive index and the normal (direction) refractive index is taken as the out-of-plane retardation.

In many liquid crystal displays, an in-plane refractive index anisotropy is changed by applying a voltage to provide a contrast between bright and dark states. Generally, a product of a thickness of the liquid crystal layer and the in-plane refractive index anisotropy, i.e., a difference between a maximum refractive index and a minimum refractive index in the in-plane is referred to as a "retardation". In the above description in RELATED ART, the term "retardation" is used as this meaning. However, herein, the retardation in this meaning is referred to as an "in-plane retardation" so as to be differentiated from the out-of-plane retardation. The same holds true for the phase plate.

(First Embodiment)

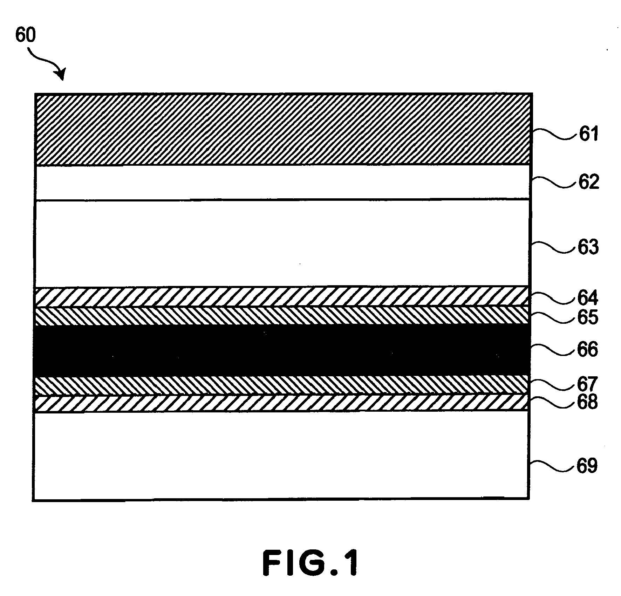

Figure 1 is a schematic sectional view showing a structure of a reflection-type liquid crystal display device as an example of the color liquid crystal display device according to the present invention used in a color liquid crystal display apparatus.

Referring to Figure 1, a reflection-type liquid crystal display device 60 comprises a lamination structure including a polarizer 61, a viewing angle compensation film 62 as a phase plate, a first glass substrate 63 as a first substrate disposed on an observer side, a transparent electrode 64, an alignment film 65, a liquid crystal layer 66, an alignment film 67, a reflection electrode 68, a second glass substrate 69 as a second substrate disposed opposite to the first glass substrate 63.

Incidentally, the reflection electrode 68 may be provided with an unevenness by a known method so as to possess divisibility or may be provided with a front scattering film disposed between the viewing angle compensation film 62 and the first glass substrate 63 or on the viewing angle compensation film 62 so as to possess diffusibility.

The liquid crystal display device 60 employs a so-called vertical alignment (VA) mode in which liquid crystal molecules of a liquid crystal material having a negative dielectric anisotropy are vertically (or homeotropically) aligned. As the polarizer 61, a wide-band circular polarizer may preferably be used. In the case where the side-band circular polarizer is used, a so-called normally black mode for displaying black in no voltage application state is adopted.

The viewing angle compensation film 62 disposed between the polarizer 61 and the first glass substrate 63 has an optical axis in a direction normal to the film and is a uniaxial phase film having an extraordinary refractive index in a direction perpendicular to the film surface and an isotropic refractive index in an in-plane direction of the film. Such a phase film is referred to as a "C plate".

A C plate having a larger refractive index in a direction normal to the substrates than in the in-plane direction, i.e., having a low axis in the substrate normal direction is referred to as a "positive C plate". A C plate having a smaller refractive index in the substrate normal direction than in the in-plane direction, i.e., having a fast axis in the substrate normal direction is referred to as a "negative C plate".

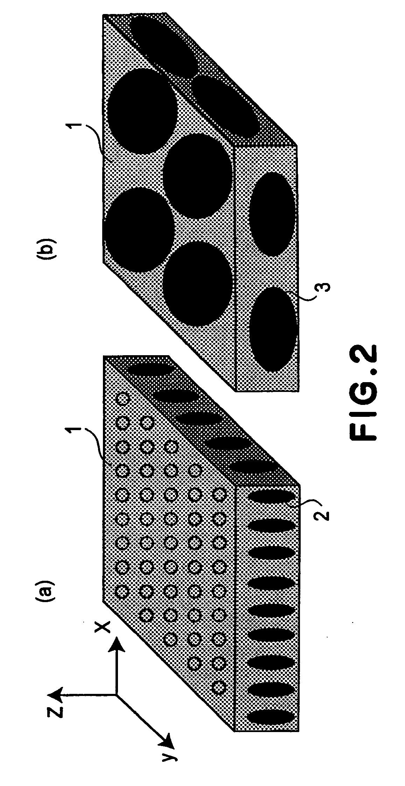

Figures 2(a) and 2(b) are schematic views each showing a relationship between index ellipsoid and a film surface of a C plate. The C plate shown in Figure 2(a) is a positive C plate in which an index ellipsoid 2 is located perpendicularly to a (major) surface of a film 1. The C plate shown in Figure 2(b) is a negative C plate in which an index ellipsoid 3 is disposed with a flattened surface in parallel with the (major) surface of the film 1. An out-of plane retardation (value) of the C plate (viewing angle compensation film 62) is defined as a value obtained by multiplexing a difference, between a refractive index in the in-plane direction of the film and a refractive index in the direction perpendicular to the film surface, by a thickness of the film.

In a currently available VA mode liquid crystal display device, the negative C plate is generally used and a retardation is set so as to retain a black display state even when the device is viewed in an oblique direction. The VA liquid crystal itself has the same structure as the positive C plate having the optical axis (slow axis) in the substrate normal direction, so that the above condition can be satisfied by using a negative C plate, having the same phase difference as the liquid crystal layer 66, as the viewing angle compensation film 62. On the other hand, when the positive C plate is used, the viewing angle characteristic is caused to be poor, so that the positive C plate can be ordinarily used in the above described case.

In the liquid crystal cell possessing an optical anisotropy as described above, a display state is precisely identical to that in which there is no birefringence medium during black display, so that there is no viewing angle characteristic resulting from the liquid crystal.

By using the negative C plate, even when the liquid crystal display device is viewed in any oblique direction, a bright display state cannot be accidentally created due to leakage of light. As a result, it becomes possible to obtain a display with a wide viewing angle. In an actual display device, however, a viewing angle characteristic due to the polarizer remains, so that there is a slight viewing angle characteristic. However, the resultant viewing angle characteristic of the liquid crystal display device is generally good.

As described above, in order to optimize birefringence during black display so as to be optically isotropic, a retardation (value) of the viewing angle compensation film 62 used is required to be substantially identical to a retardation (value) of the liquid crystal layer 66 in terms of an absolute value.

However, when an optical film having such a retardation is applied to the hybrid color liquid crystal mode, a characteristic during black display is very good similarly as in the case of an ordinary VA liquid crystal display but during red or blue display, a viewing angle dependency is observed. As a result, it is not necessarily possible to obtain a good viewability. With respect to specific numerical values, description will be made in Examples appearing hereinafter and only a qualitative explanation is made with respect to results obtained and embodiments for improvement.

Similarly as in the case of the VA liquid crystal mode, a black display characteristic in the hybrid color liquid crystal mode is equivalent to that in the case of absence of the birefringence medium by designing an absolute value of the retardation of the viewing angle compensation film 62 so as to be equal to an absolute value of the retardation of the liquid crystal layer 66. As a result, it becomes possible to display complete black which does not depend on the viewing angle. This is precisely identical to the effect in the case of the commercially available VA liquid crystal display.

The VA liquid crystal is changed in alignment state from a vertical (homeotropic) alignment state to a parallel (homogeneous) alignment state when a voltage is applied thereto. Also in the hybrid color liquid crystal mode, when the liquid crystal is vertically aligned to realize a normally black mode, black display is effected in the case where the liquid crystal is placed in the vertical alignment state under no voltage application. The alignment state comes close to the parallel alignment state when the color display is effected by applying a high voltage to the liquid crystal. In the case where a complete optical isotropy is obtained during the black display on the basis of the above described designing, it has been found by study of the present inventor that hue is largely changed depending on the viewing angle during the color display.

Here, consideration of the change in hue depending on the viewing angle will be made on the basis of an article reported in T. Suzuki and M. Suzuki:

"Display Quality Improvement of IPS Mode TFT-LCDs using Optical Compensation",
Preprints of Symposium on Japanese Liquid Crystal Society, Issue 1998, 2C04, pp. 322 - 323 (1998).

This article describes a compensation film for improving a viewing angle in in-plane switching (IPS) mode. The IPS mode provides the parallel (homogeneous) alignment. In order to suppress a coloring phenomenon due to a viewing angle in the IPS mode, a positive C plate is inserted. It has been reported in the article that the positive C plate has an amount of birefringence (retardation) which is zero in the case of vertical incident light and is constituted so as to cancel the amount of birefringence with an inclination degree of the incident light, thus being capable of suppressing coloring due to the change in viewing angle.

Also in the vertical alignment (VA) mode, the liquid crystal is placed in such an alignment state that liquid crystal molecules are inclined or substantially parallel with respect to the substrate under voltage application. The alignment state of the liquid crystal aligned in parallel with the substrate is similar to that of the liquid crystal in the IPS mode.

In the above described article, good results are achieved by a combination of the IPS mode providing the parallel alignment and the positive C plate having the same structure as the vertically aligned liquid crystal. Accordingly, in order to improve the viewing angle under voltage application in the VA liquid crystal mode, the positive C plate may be used. On the other hand, in the case where a similar consideration is made when the negative C plate is used, the use of the negative C plate leads to poor viewing angle characteristic in a voltage application state.

Also in the case of the ECB color mode (including the hybrid color liquid crystal mode as an example thereof) employing the vertical alignment mode similar to the VA liquid crystal mode, it is possible to suppress the viewing angle dependency of display color by using the positive C plate with respect to the color display under voltage application.

However, the use of the positive C plate in the VA liquid crystal mode leads to poor display characteristic in the black state as described above. In the case where color display based on the birefringence is only effected on the entire surface of the liquid crystal display device, the use of the positive C plate is sufficient for that purpose as described above. However, in the hybrid color liquid crystal mode, color display is effected by color mixing at two-types of pixels including a pixel for effecting the ECB-based color display and a pixel provided with a green color filter.

For example, in the case of such a constitution that one pixel is constituted by two subpixels including a first subpixel provided with a magenta color filter and a second subpixel provided with a green color filter, in the normally black mode, black is displayed when a voltage is not applied. When the voltage is applied to the first subpixel while being gradually increased in voltage value, the display color is changed in the order of black, dark magenta, bright magenta, red, violet, and blue.

Similarly, when the voltage is applied to the second subpixel while being gradually increased in voltage value, the display color is changed in the order of black, dark green, and bright green. Further, when the voltage is applied to both the first and second subpixels at the same time, the display color is changed in the order of black, gray, and white.

In this case, when the positive C plat is used, the viewing angle characteristic during the ECB-based color display at a voltage close to a maximum voltage applied to the first subpixel is improved considerably. However, the viewing angle characteristic during the black display is very poor under no voltage application.

For example, in the case where blue display is effected, a maximum voltage is applied to the first subpixel so that the liquid crystal molecules are inclined to effect blue display and no voltage is applied to the second subpixel so that the liquid crystal molecules remain in the vertical alignment state to effect black display.

In this case, the viewing angle characteristic at the blue display portion in the first subpixel is good but the viewing angle characteristic at the second subpixel is poor, so that the black display state cannot be retained at the second subpixel when the viewing angle is changed. As a result, the second subpixel is colored green. In other words, when color mixing (mixture) at the first and second subpixels is observed, blue is shifted toward green depending on the viewing angle, so that hue is changed as a whole. Also in the case of red display, red is shifted toward yellow.

On the other hand, when a negative C plate which is optimized so that it can be used in the ordinary VA liquid crystal display and is optically isotropic, black display at the second subpixel is constant irrespective of the viewing angle. However, blue display at the first subpixel causes a large viewing angle dependency.

More specifically, in the case were color mixing at the first and second subpixels is observed, when the viewing angle is changed, the display state depends on the viewing angle characteristic at the first subpixel. As a result, hue of blue is changed. The subpixel for displaying blue is provided with the magenta color filter, so that color shift from blue toward magenta is observed.

In the case of red, similarly, color shift from red toward magenta is caused to occur. As described above, the viewing angle during black display and the viewing angle during ECB-based color display provide a trade-off relationship therebetween.

The present inventor has performed evaluation of practically available various images such as monochromatic characters and color photographs as an image to be displayed in order to optimize the viewing angle characteristic and the contrast with a good balance therebetween, thus obtaining the following results.

More specifically, with respect to a viewability of character display, it is possible to effect excellent display by using the negative C plate. In most cases, the character is displayed as a monochromatic image (a black character on a white background), so that a viewing angle dependency of color presents no problem. As a result, the viewability of character display becomes best by optimizing the contrast. In the monochromatic display, only brightness modulation at the green and a magenta subpixels is utilized, so that it is possible to obtain a good viewability by using the negative C plate similarly as in the case of RGB color method. Also in the case of displaying photographic images with respect to a color photograph only of green or magenta or a monochromatic photograph, it is clear that a good viewability can be obtained by using the negative C plate providing a minimum change in contrast depending on the viewing angle similarly as in the RGB color method since only the brightness modulation is utilized.

With respect to ordinary graphic images including mixed blue or red, as described above, the change in hue depending on the viewing angle at the magenta subpixel is problematic. However, by setting an absolute value of a retardation of the negative C plate so as to be somewhat smaller than an absolute value of a retardation providing a minimum change in contrast depending on the viewing angle, i.e., an absolute value of a retardation completely canceling the refractive index anisotropy of the liquid crystal layer, the resultant image quality is at level of no problem as that of the color graphic image (although a slight change in color is recognized). This is presumably because although a slight change in color during blue display and red display is caused to occur by the use of the negative C plate, the change in color is substantially a change in hue and thus a color saturation is little changed. As a result, it is considered that the change in color does not adversely affect the resultant photographic display quality.

In the case of using the positive C plate, as described above, the light leakage is caused to occur when the light blocking state (black state) is obliquely observed to change the hue. In the photographic image display, particularly, red is changed to yellow (yellowish red) by color mixture with green. As a result, a resultant display quality is considerably deteriorated.

As described above, in view of a total balance with respect to the viewing angle characteristics of the contrast and the hue, a best characteristic is obtained when the C plate having the negative retardation is used. When the retardation of the C plate is set to a value, in a negative range, smaller in terms of an absolute value than a value providing such a condition that the retardation of the liquid crystal layer in vertical alignment (of liquid crystal molecules) is completely canceled, the C plate still has the canceling effect to some extent also with respect to the change in refractive index when the liquid crystal is inclined. As a result, it is possible to suppress not only the change in contrast in the light blocking state but also the change in hue in the light transmitting state. Accordingly, it is possible to optimize the viewing angle characteristics of both the contrast and the hue with a good balance therebetween.

Similarly as in the conventional RGB color method, when the retardation of the negative C plate is set to a predetermined value just canceling the retardation of the liquid crystal layer during black display, the viewing angle dependency is undesirably noticeable in a hue change range. When the retardation value of the negative C plate is smaller than the predetermined value, a change in color is small while keeping a contrast, so that a well-balanced image can be obtained.

In the VA mode, where the liquid crystal is in the vertical alignment state under no voltage application, a refractive index ellipsoid of the liquid crystal layer is perpendicular to the substrates, so that it has a maximum refractive index in the vertical direction (long axis direction) and a minimum refractive index in the in-plane direction (short axis direction). The refractive index ellipsoid of the liquid crystal when the liquid crystal is obliquely aligned by applying a voltage thereto is changed so that it has a smaller refractive index in the vertical direction and an averagely larger refractive index in the horizontal direction. In other words, the liquid crystal layer is changed by the voltage application in such a direction that its retardation is decreased with respect to the oblique incident light.

The setting of the absolute value of the retardation of the C plate so as to be smaller than that of the retardation completely canceling the refractive index anisotropy means such a setting that the absolute value of the retardation of the C plate is set to an intermediary value between a retardation of the liquid crystal layer when the liquid crystal is placed in the vertical alignment state and black is displayed at the pixel and a retardation of the liquid crystal layer when the liquid crystal is placed in the oblique alignment state or the horizontal (homogeneous) alignment state and the pixel (second subpixel) is placed in a chromatic color display state. As a result, it is possible to realize a well-balanced optimization with respect to both the contrast and the hue.

According to study by the present inventor, when a total balance of the viewing angle characteristics at the first subpixel and the second subpixel is taken into consideration, it has been found that a best characteristic is obtained by using the negative C plate.

Further, it has been also found that the retardation of the negative C plate may preferably be smaller than a value providing an optimum condition of viewing angle dependency of contrast. Further, when a retardation of the negative C plate providing an optimum contrast is taken as $R_{CR}$ (nm), a preferred retardation in this display mode is not less than 1 (nm) and less than $R_{CR}$ x 3/4 (nm), more preferably be not less than $R_{CR}$ x 1/4 (nm) and less than $R_{CR}$ x 3/4 (nm) .

Further, when a product of a refractive index anisotropy $\Delta n$ of the liquid crystal material and a cell thickness d is taken as $R_{LC}$, a preferred retardation of the negative C plate in this display mode is not less than 1 (nm) and less than $R_{LC}$ x 3/4 (nm), in terms of an absolute value.

As described above, by employing the constitution using the negative C plate as the viewing angle compensation film 62, it is possible to realize a liquid crystal display device capable of suppressing the viewing angle dependency during the color display while suppressing the viewing angle dependency during black display to improve the viewing angle dependency of contrast.

More specifically, it is possible to provide a color liquid crystal display device and a color liquid crystal display apparatus which are bright and have a high light utilization efficiency, a high display quality, and a wide viewing angle characteristic by aligning liquid crystal molecules of the liquid crystal layer 66 in a direction substantially perpendicular to the substrates 63 and 69 during no voltage application and by providing the viewing angle compensation film 62 which has an optical axis in a direction substantially perpendicular to the substrate surface, has an optical path (length) larger in the in-plane direction of the substrate than in the direction normal to the substrate, and has an absolute value, of a difference between the optical paths, smaller than an absolute value of the retardation of the liquid crystal layer 66.

(Second Embodiment)

Hereinbelow, Second Embodiment will be described. In this embodiment, the phase compensation plate used in the present invention is applied to a liquid crystal in an optically compensated bend (OCB) mode. A basic concept in this embodiment is similar to that in First Embodiment. Thus, in the following, different points will be principally described.

A basic structure of an OCB-mode liquid crystal display device is similar to that of the VA-mode liquid crystal display device shown in Figure 1. In the OCB mode, different from the VA mode, a liquid crystal material having a positive dielectric anisotropy is used. Further, in order to realize bend alignment, the alignment treatment (rubbing treatment) is performed in the horizontal direction and an alignment change treatment (transfer treatment) from splay alignment to bend alignment is performed by a known method. In the thus prepared OCB-mode liquid crystal display device, when a voltage not less than a predetermined bend alignment retention voltage is applied, the liquid crystal is changed in alignment from bend alignment to vertical (homeotropic) alignment. Under a strong electric field, the liquid crystal is aligned in a direction substantially perpendicular to the substrate, so that this alignment is herein referred to as the "vertical alignment". In the OCB mode, optical modulation is performed by controlling an intermediary state between those of the bend alignment and the vertical alignment through a voltage.

In either case of the bend alignment and the vertical alignment in the OCB mode, the in-plane retardation still remains in the display device. For this reason, phase compensation is performed by using an optical film having an in-plane retardation (referred to as an "A plate"). This A plate is designed so that a total of the in-plane retardation in the light blocking state is zero in combination with the liquid crystal layer.

As the optical film used for compensating the viewing angle, other than an A plate having an optical axis in the in-plane direction of the substrates, it is possible to use various optical films, such as an O plate having an inclined optical axis and a film in which an intrinsic alignment state of the liquid crystal is fixed.

Hereinbelow, explanation of display principle will be made by using the A plate as an example but other films can also be applicable in a similar manner.

A mode in which the in-plane retardation of the A plate is set so that the bend alignment state is a black state is referred to as a "normally black mode". On the other hand, a mode in which the in-plane retardation of the A plate is set so that the vertical alignment state under applicable of a large voltage is a black state is referred to as a "normally white mode" (since white is displayed when no voltage or a small voltage is applied).

International Patent Publication No. WO2005/106574 has proposed such an embodiment that the A plate is applied to a hybrid color method using the OCB liquid crystal. In the case of the hybrid color method, when the in-plane retardation of the A plate is set so that the vertical alignment state under application of the large voltage is black state, color display is effected when no voltage or a small voltage is applied. This mode is referred to as a "normally color mode".

Such an embodiment that the present invention is applied to a hybrid color liquid crystal display device which employs the OCB mode and is provided with an A plate in the normally black mode or the normally color mode will be described.

A basic concept is similar to that of the VA mode. In the normally color mode, the A plate is disposed so that light is completely blocked when liquid crystal molecules are substantially vertically aligned by applying a high voltage. The in-plane retardation of the A plate may be such a small value that it cancels a slight in-plane retardation left by the liquid crystal layer. Light is blocked by a combination of the A plate and the liquid crystal layer but light leakage is caused to occur when the display device is viewed in an oblique direction, thus lowering a contrast. The retardation of the combination of the A plate and the liquid crystal layer substantially predominantly controlled by the retardation of the liquid crystal layer since the in-plane retardation of the A plate is small, so that it has a positive value with respect to oblique incident light. When the C plate having a negative retardation is disposed to cancel the positive retardation, the viewing angle retardation of the contrast is improved. However, similar as in the case of the VA mode, a change in hue depending on the viewing angle is caused to occur in a low voltage range, thus considerably lowering an image quality of the photographic image. For this reason, the retardation value of the C plate is negative but may preferably have an absolute value smaller than an absolute value of a retardation capable of completely compensating the black state of the liquid crystal layer including the A plate. In the normally black mode, when the liquid crystal is placed in the bend alignment state under application of a low voltage, a light blocking state is formed by the A plate. The in-plane retardation value of the A plate is a relatively large value in order to cancel the in-plane retardation in the bend alignment.

There is no refractive index anisotropy of the combination of the liquid crystal layer and the A plate in the in-plane direction but in the vertical direction, there is a positive refractive index anisotropy resulting from a refractive index component of the liquid crystal layer in the vertical direction. In order to alleviate the viewing angle dependency due to this positive refractive index anisotropy, the negative C plate is disposed. Here, in the case where the retardation value of the C plate is set to a value just canceling the retardation of the combination of the liquid crystal layer in the light blocking state and the A plate, a viewing angle dependency of hue becomes large when the liquid crystal is placed in the vertical alignment state by applying a high voltage thereto. As a result, a good image quality cannot be obtained. In this case, a vertical direction component of the liquid crystal is increased by the voltage application, so that the refractive index in the vertical direction is changed to a larger value with an increasing voltage. As a result, the refractive index in the in-plane direction is changed to a smaller value. In other words, the retardation is increased in the positive direction. Accordingly, in order to reduce the viewing angle dependency in the hue change range, it is preferable that the C plate having a retardation value larger than a value just canceling the retardation of the combination of the liquid crystal in the light blocking state and the A plate.

Based on the above results, in view of a total balance of the viewing angle characteristics at the first subpixel and the second subpixel, a best characteristic can be obtained when the negative C plate is used. It is further preferable that the absolute value of the retardation is set so that it is shifted to a value providing an improved viewing angle characteristic in the hue change range rather than a value providing an optimum condition of the viewing angle dependency of the contrast.

When the retardation of the liquid crystal layer (including the A plate) during the chromatic color display is smaller than the retardation thereof during the light blocking, the negative retardation value of the C plate is shifted to a smaller value, in terms of an absolute value, than a value providing the optimum condition of the viewing angle dependence of the contrast. The OCB mode in which the VA mode and the normally color mode are set is used in this case.

On the other hand, when the retardation of the liquid crystal layer (including the A plate) during the chromatic color display is larger than the retardation thereof during the light blocking, the negative retardation value of the C plate is shifted to a larger value, in terms of an absolute value, than a value providing the optimum condition of the viewing angle dependence of the contrast, i.e., in a negative direction. The OCB mode in which the normally black mode is set is used in this case.

In either case, the retardation of the negative C plate is set to a value, as an absolute value, between the retardation of the liquid crystal layer including the A plate during the light blocking (black display) and the retardation thereof during display of the chromatic color.

As described above, by using such a constitution that the negative C plate is used as the viewing angle compensation film 62, it is possible to realize a liquid crystal display device not only improved in the viewing angle dependency of the contrast by suppressing that during the black display but also improved in the viewing angle dependency during the color display.

The reflection-type liquid crystal display device as an example of the color liquid crystal display device of the present invention is described hereinabove. Next, as another example, a transflective-type liquid crystal display device will be described below.

As described in WO2004/042687, the transflective-type liquid crystal display device includes the second substrate which is provided with a light reflection layer for reflecting light incident layer for transmitting the light incident from the first substrate side, thus compatibly realizing reflection-type display with a high reflectance and transmission-type display capable of effecting full-color display. BY using the above described display principle of the reflection-type liquid crystal display device for the reflection-type display portion and using the conventional RGB color filter method for the transmission-type display portion, it is possible to compatibly realize the reflection-type display with a high reflectance and the transmission-type display permitting full-color display.

Further, in this case, an in-plane retardation of the liquid crystal layer required for the RGB color filter method is close to an in-plane retardation of the liquid crystal layer required for the color display based on the birefringence effect in this embodiment, so that there is such an advantage that it is not necessary to use a conventionally problematic multi-gap process in which the reflection-type display portion and the transmission-type display portion have different cell thicknesses.

In the above description, with respect to the reflection-type color display based on the birefringence effect, the preferred retardation of the negative C plate is a value smaller than a value satisfying such a condition that the birefringence of the liquid crystal layer is completely compensated to obtain an optical anisotropy (e.g., smaller than 3/4 thereof). In other words, it is possible to obtain a good viewability by adopting a retardation value capable of suppressing the change in hue although the retardation value is somewhat deviated from an ideal value from the viewpoint of the viewing angle dependency of contrast.

On the other hand, the transmission-type display portion is required to effect high-quality full-color display. Here, in the transflective-type liquid crystal display device described in WO2004/042687, as described above, it is possible to realize full-color display at the transmission-type display portion by using only the brightness change range of the liquid crystal, without using the birefringence-based color display, and the RGB color filter method in combination. In other words, this display mode is quite identical to the conventional VA liquid crystal mode, so that the compensation film used may be set to provide an optimum condition of contrast.

In summary, when viewed from the liquid crystal layer 66, the negative C plate having a retardation smaller than a value satisfying a condition providing optical isotropy may be disposed on a side which is observed as the reflection-type display portion. Further, in order to observe a side as the transmission-type display portion, the device constitution may be set to satisfy the condition providing the optical isotropy. More specifically, on the side observed from the liquid crystal layer 66 as the reflection-type display portion, a C plate having a predetermined amount of retardation determined depending on a purpose of use on the basis of the above described concept is disposed and on the other side (opposite side), a C plate having an amount of retardation for supplementing an insufficient amount of retardation for realizing the optical isotropy may be additionally disposed to effect very good transmission-type display.

Incidentally, it is possible to achieve an improvement effect by disposing the negative C plate on the side opposite to the observation side of the reflection-type display portion although it cannot be said that a complete optical isotropy is obtained.

Hereinbelow, the present invention will be described more specifically based on Examples.

(Common Device Constitution)

In the following Comparative Examples and Examples, a common device structure is as follows.

A basic constitution of a liquid crystal layer structure is the same as that shown in Figure 1. More specifically, two (upper and lower) glass substrates 3 and 7 subjected to homeotropic (vertical) alignment treatment are applied to each other with a spacing to prepare a cell. Into the spacing of the cell, a liquid crystal material (Model: "MLC-6608", mfd. by Merck & Co., Inc.) having a negative dielectronic anisotropy ($- \Delta \varepsilon$) and a refractive index anisotropy $\Delta n$ of 0.083 is injected so as to provide a cell thickness of 6 $\mu$m. Further, the liquid crystal molecules form a pretilt angle of 1 degree on the basis of a direction perpendicular to each of the substrates 63 and 69. The pretilted liquid crystal molecules on the upper and lower substrates 63 and 69 are parallel with each other but different in their inclination directions (anti-parallel relationship).

As the substrate structure used, one of the substrates is an active matrix substrate provided with thin film transistors (TFTs) and the other substrate is a color filter substrate provided with color filters, as desired depending on the examples. As a pixel electrode on the TFT side substrate, an aluminum electrode is used to provide a reflection-type constitution.

Between the upper substrate (color filter substrate) and a linear plate, a wide-band $\lambda/4$ plate (phase-compensation plate capable of substantially satisfying 1/4 wavelength condition in visible light region) is disposed as a wide-band circular polarizer 61, thereby to provide such a normally black constitution that a dark state is given under no voltage application and a bright state is given under voltage application when reflection-type display is effected. Further, between the wide-band circular polarizer 61 and the color filter substrate 63, a C plate having an optical axis in a direction normal to the substrates. A retardation of the C plate is changed depending an examples.

Evaluation of characteristics in examples is performed by using a goniophotometer (GCMS-11, mfd. by MURAKAMI COLOR RESEARCH LABORATORY CO., LTD.). Measurement is performed by causing light to enter the goniophotometer from a polar angle direction which is the same direction as the pretilt angle and is 30 degrees inclined from the substrate normal direction to measure reflected light with respect to the substrate normal direction. Hereinafter, this measurement condition is referred to as "30 deg.-incidence and normal direction observation condition".

(Comparative Example 1)

For comparison, a reflection-type liquid crystal display device (cell) having 1 cm-square electrodes is prepared. This cell is constituted by disposing a lower substrate, an aluminum electrode, an alignment film, a liquid crystal layer, an alignment film, a transparent electrode, an upper substrate, a front scattering plate, and a wide-band circular plate in this order from the bottom of the cell. In this comparative example, a TFT and a color filter are not used.

In this liquid crystal display device, black display is effected under no voltage application, and white display is effected by applying a voltage of 2.75 V. Further, red display with low purity is effected under application of a voltage of 3.3 V, and blue display is effected under application of a voltage of 4.3 V. A contrast which is a ratio of brightness between white and black is about 5. (Comparative Example 2)

A reflection-type liquid crystal display device is prepared in the same manner as in Comparative Example 1 except that a magenta color filter of color resist ("CMS571", mfd. by FUJIFILM Arch Co., Ltd.) is disposed between the upper substrate and the transparent electrode.

In this liquid crystal display device, black display is effected under no voltage application, and bright magenta display is effected by applying a voltage of 2.75 V. Further, red display with high purity is effected under application of a voltage of 3.3 V, and blue display is effected under application of a voltage of 4.3 V. A contrast which is a ratio of brightness between black and magenta is about 5.

A difference in display color of spectrum under the 30 deg.-incidence and normal direction observation condition is evaluated by taking spectrum, of reflected light when light is caused to enter the device (cell) from a substantially front side and is reflected in the substrate normal direction, as reference color.

In order to evaluate this difference, an index of ΔE is used.

The index ΔE is an index for representing quantitatively a difference in color between the reference color and measured display color and can be represented by the following equation:

$$\Delta E = \sqrt{\left(L_1^* - L_2^*\right)^2 + \left(a_1^* - a_2^*\right)^2 + \left(}$$

wherein $L_1^*$, $a_1^*$, and $b_1^*$ represent three indice L*, a* and b* for a display color in CIELAB color system (color space); and $L_2^*$, $a_2^*$ and $b_2^*$ represent three indice L*, a* and b* for another display color in CIELAB color system.

The index ΔE is generally referred to as "color difference".

During red display, ΔE is about 10 and during blue display, ΔE is about 6.

With respect to values of ΔE (color difference) when incident direction (azimuth) of light is changed, in the case where the incident direction is 45 degrees deviated from the inclination angle direction of pretilt, a color difference (ΔE) during red display is about 30 and a color difference during blue display is about 12. In the case where the incident direction is 90 degrees deviated from the inclination angle direction of pretilt, a color difference during red display is about 30 and a color difference during blue display is about 13. (Comparative Example 3)

A reflection-type liquid crystal display device is prepared in the same manner as in Comparative Example 1 except that a C plate is disposed between the front scattering plate and the wide-band circular polarizer.

When a contrast is measured by changing a retardation of the C plate from -500 (nm) to +500 (nm), a maximum contrast of not less than 50 is obtained by using a negative C plate having a retardation of 380 nm.

Next, a reflection-type liquid crystal display device is prepared in the same manner as in Comparative Example 2 except that a C plate is disposed between the front scattering plate and the wide-band circular polarizer.

When a contrast is measured by changing a retardation of the C plate from -500 (nm) to +500 (nm), a maximum contrast of not less than 50 is obtained by using a negative C plate having a retardation of 380 nm, similarly as in the above case using no color filter.

When a color difference ΔE is measured by using the negative C plate providing the maximum contrast, a color difference during red display is about 20 and a color difference during blue display is about 40 in the case where the incident direction of light is the inclination angle direction of pretilt, thus being worsen compared with the case of using no C plate. Further, in the case where the incident direction of light is 45 degrees deviated from the inclination angle direction of pretilt, a color difference during red display is about 50 and a color difference during blue display is about 30. In the case where the incident direction of light is 90 degrees deviated from the inclination angle direction of pretilt, a color difference during red display is about 60 and a color difference during blue display is about 40.

These results are found to be worsen compared with those in Comparative Example 2 using no C plate with respect to any incident angle of light.

(Example 1)

A reflection-type liquid crystal display device is prepared in the same manner as in Comparative Example 2 except that a C plate is disposed between the front scattering plate and the wide-band circular polarizer.

In this example, a retardation of the C plate providing a minimum value of a color difference varying depending on a viewing angle during ECB effect-based color display is determined by changing the retardation of the C plate from -500 (nm) to +500 (nm).

When ΔE (color difference) is measured by changing the retardation of the C plate from -500 (nm) to +500 (nm), a minimum ΔE is generally obtained at positive retardation values during both red display and blue display although it varies depending on the incident direction of light.

In the case where the incident direction of light is the inclination angle direction of pretilt, a retardation of the C plate providing a minimum color difference during red display is about -100 nm and a retardation of the C plate providing a minimum color difference during blue display is about +100 nm. The minimum color difference during red display is about 5 and the minimum color difference during blue display is less than 1.

In the case where the incident direction of light is 45 degrees deviated from the inclination angle direction of pretilt, a retardation of the C plate providing a minimum color difference during red display is about +300 nm and a retardation of the C plate providing a minimum color difference during blue display is about +300 nm. The minimum color difference during red display is about 6 and the minimum color difference during blue display is about 3.

In the case where the incident direction of light is 90 degrees deviated from the inclination angle direction of pretilt, a retardation of the C plate providing a minimum color difference during red display is about +250 nm and a retardation of the C plate providing a minimum color difference during blue display is about +250 nm. The minimum color difference during red display is about 18 and the minimum color difference during blue display is about 6.

Incidentally, in the case where the C plate has a retardation of +300 and the incident angle of light is the inclination angle direction of pretilt or 90 degrees deviated from the inclination angle direction of pretilt, a resultant contrast is not more than 1. As a result, it is found that white/black inversion phenomenon due to viewing angle dependency is caused to occur.

According to this example, by using the positive C plate, it becomes possible to suppress a change in hue depending on the viewing angle during ECB effect-based color display in almost all the cases although a contrast between bright and dark states is decreased.

(Example 2)

In this example, as an active matrix substrate, a TFT substrate having a diagonal length (size) of 12 inch and 600x800 pixels. The device (cell) structure include the TFT substrate, an aluminum electrode, an alignment film, a liquid crystal layer, an alignment film, a transparent electrode, a color filter, an upper substrate, a front scattering plate, and a wide-band circular polarizer disposed in this order from the bottom of the device.

Each pixel is divided into two subpixels provided with a green color filter and a magenta color filter, respectively. These green (G) subpixel and magenta (M) subpixel provide an areal ratio of 1:1.13 (G:M) .

At each pixel, when a voltage of 2.75 V is applied to the G subpixel and no voltage (0 V) is applied to the M subpixel, green display is effected as a whole. When no voltage is applied to the G subpixel and a voltage of 2.75 V is applied to the M subpixel, magenta display is effected as a whole. Further, when a voltage of 2.75 V is applied to both the G subpixel and the M subpixel, white display is effected as a whole. When no voltage is applied to the G subpixel and a voltage of 3.3 V is applied to the M subpixel, red display as a whole. When no voltage is applied to the G subpixel and a voltage of 4.3 V is applied to the M subpixel, blue display is effected as a whole. Further, when a voltage of 2.75 V is applied to the G subpixel and a voltage of 3.3 V is applied to the M subpixel, yellow display is effected as a whole. When a voltage of 2.75 V is applied to the G subpixel and a voltage of 4.3 V is applied to the M subpixel, cyan display is effected as a whole.

In such a display device, a C plate is disposed between the front scattering plate and the wide-band circular polarizer. By changing a retardation of the C plate from -500 (nm) to +500 (nm), a color difference ( $\Delta E$) varying depending on viewing angle is measured during ECB effect-based color display.

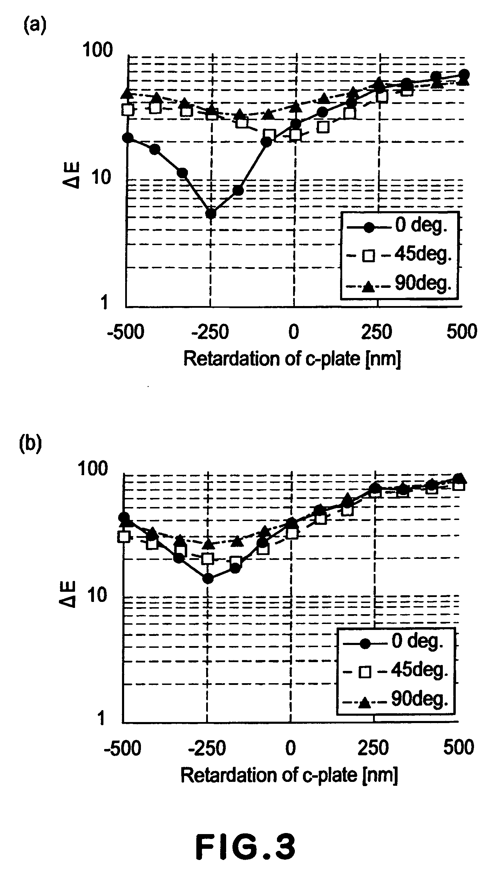

The results are shown in Figures 3(a) and 3(b), wherein Figure 3(a) shows the results during red display under application of a voltage of 3.3 V, and Figure 3(b) shows the results during blue display under application of a voltage of 4.3 V.

As apparent from these figures, it is found that the color difference is a minimum by using the negative C plate. Further, it is also found that the retardation values providing the minimum color differences are smaller than -380 nm described in Comparative Example 3, in terms of an absolute value. More specifically, it is found that the minimum color differences are given at a retardation of approximately -250 nm.

When a negative C plate having a retardation of 250 nm (absolute value) is used, a resultant contrast is 20 when the display device is viewed in the inclination angle direction of pretilt. As a result, it is found that a sufficient viewability (visibility) is obtained.

(Example 3)

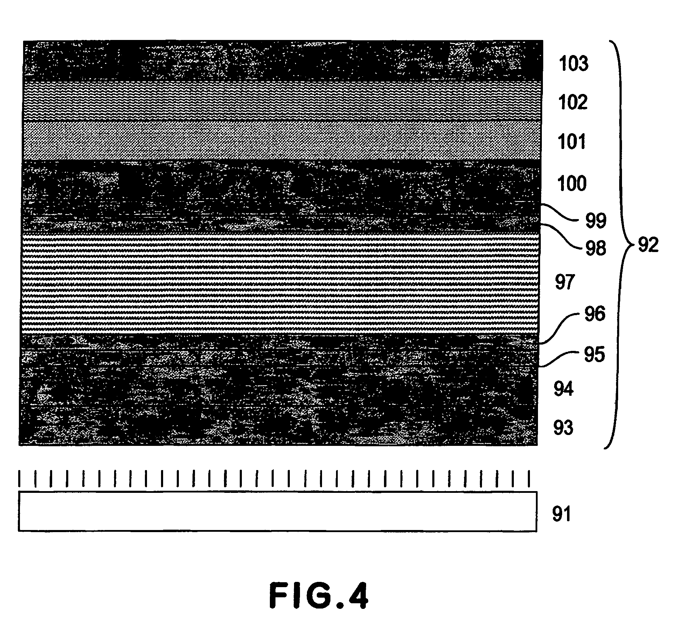

In this example, a transflective-type liquid crystal display device provided with a backlight as shown in Figure 4 is prepared. More specifically, a transflective-type liquid crystal display device 92 is disposed on a backlight 91 and includes a first wide-band circular polarizer 93, a glass substrate 94 provided with TFT, a reflection (or transparent) electrode 95, an alignment film 96, a liquid crystal layer 97, an alignment film 98, a transparent electrode 99, a glass substrate 100, a front scattering plate 101, a negative C plate 102, and a second wide-band circular polarizer 103 disposed in lamination in this order from the backlight side.

Between the glass substrate 94 provided with TFT and the alignment film 96, the transparent electrode is disposed at a light transmission-type portion and the reflection electrode is disposed at a light reflection-type portion. A cell thickness is 6 $\mu$m which is common to the transmission-type portion and the reflection-type portion. A unit pixel comprising a plurality of subpixels is roughly classified into the transmission-type portion and the reflection-type portion. At the transmission-type portion, three color filters of RGB are provided. Further, at the reflection-type portion, a green color filter and a magenta color filter are provided.

In the above prepared transflective-type liquid crystal display device, by using a negative C plate having a retardation of 250 nm (absolute value) on the basis of the results in Example 1 as the negative C plate 102 disposed between the front scattering plate 101 and the second wide-band circular polarizer 103, it is possible to effect good reflection-type display.

Further, a second negative C plate different from the (first) negative C plate 102 (disposed between the front scattering plate 101 and the second wide-band circular polarizer 102) is disposed between the first wide-band circular polarizer 93 and the glass substrate 94 provided with TFT. Compared with the case where the second negative C plate is not used, by using the second negative C plate having a retardation of 60 nm (absolute value), it is possible to improve a viewing angle characteristic during transmission-type display, e.g., at an incident angle of light of 75 degrees, thereby to ensure a sufficient viewing angle.

(Example 4)

In this example, a transflective-type liquid crystal display device is prepared in the same manner as in Example 3 except that a front light is used in place of the backlight 91 and is disposed in front of the transflective-type liquid crystal display device 92. When the reflection-type portion is observed, reflected light of light which is emitted from the front light and reflected by the liquid crystal layer 97 is observed. On the other hand, when the transmission-type portion is observed, transmitted light of light which is emitted from the front light and passes through the liquid crystal layer 97 is observed.

When the thus prepared transflective-type liquid crystal display device is evaluated in the same manner as in Example 3, by disposing the second negative C plate between the first wide-band circular polarizer and the glass substrate provided with TFT in addition to the first negative C plate 102, it is possible to improve a viewing angle characteristic during transmission-type display, e.g., at an incident angle of light of 75 degrees, thereby to realize a good viewing angle characteristic.

(Example 5)

In this example, a transflective-type liquid crystal display device provided with a backlight as shown in Figure 4 is prepared. More specifically, a transflective-type liquid crystal display device 92 is disposed on a backlight 91 and includes a first wide-band circular polarizer 93, a glass substrate 94 provided with TFT, a reflection (or transparent) electrode 95, an alignment film 96, a liquid crystal layer 97, an alignment film 98, a transparent electrode 99, a glass substrate 100, a front scattering plate 101, and a second wide-band circular polarizer 103 disposed in lamination in this order from the backlight side. In this example, different from Example 3, a negative C plate 102 is not used.

In this example, a negative C plate is disposed between the first wide-band circular polarizer 93 and the glass substrate 94 provided with TFT. Compared with the case where the negative C plate is not used, it is self-evident that there is no difference in characteristic between the case of using the negative C plate and the case of using no negative C plate, at the reflection-type portion. In this example, however, a viewing angle characteristic at the transmission-type portion is improved by using the negative C plate having a retardation of 290 nm (absolute value).

In the above described embodiments, such a constitution that the optical film is disposed between the glass substrate and the polarizer is described. However, it is also possible to use a so-called in-cell type phase plate comprising an optical film applied between two glass substrates. As desired, it is possible to form an in-cell type phase plate having such a pattern that a C plate has different retardation values for each subpixel.

Further, in the above described embodiments, the VA mode or the OCB mode is employed but the present invention is also applicable to various alignment modes such as an electrically controlled birefringence (ECB) mode in which a liquid crystal is placed in a homogeneous alignment state under no voltage application and the alignment state is changed to the vertical alignment with an increasing voltage and a hybrid alignment (HAN) mode in which upper and lower pretilt angles are different from each other.

While the invention has been described with reference to the structures disclosed herein, it is not confined to the details set forth and this application is intended to cover such modifications or changes as may come within the purpose of the improvements or the scope of the following claims.

A hybrid color liquid crystal display device includes a liquid crystal layer in.which liquid crystal molecules are aligned homeotropically with respect to a pair of substrates under no voltage application and includes a phase plate having an optical axis in a direction perpendicular to a substrate surface. The phase plate has a refractive index which is larger in an in-plane direction of substrate than in a direction normal to the substrate surface, and has a retardation smaller than a retardation of the liquid crystal layer in terms of an absolute value, thereby to suppress a change in color depending on a viewing angle.

**Claims**

1. A color liquid crystal display device, comprising:

   a polarizer;
   a first phase plate;
   first and second substrates, disposed opposite to each other, each provided with an electrode;
   a liquid crystal layer comprising liquid crystal molecules; and
   a plurality of pixels each comprising a first subpixel for displaying chromatic color by changing an in-plane retardation of said liquid crystal layer depending on an applied voltage and a second subpixel, provided with a color filter, for displaying color of the color filter by changing an in-plane retardation in a brightness change range depending on the applied voltage;

   wherein said first phase plate has an optical axis perpendicular to a substrate surface; a refractive index in a direction normal to the substrate surface smaller than a refractive index in an in-plane direction; and an out-of-plane retardation in terms of an absolute value between an out-of-plane retardation of said liquid crystal layer of the first or the second subpixel when the pixel is in a minimum-brightness state and an out-of-plane retardation of said liquid crystal layer of the first or the second subpixel when the pixel is in a color-displaying state.

2. A device according to Claim 1, wherein said first phase plate has an out-of-plane retardation in terms of an absolute value smaller than an out-of-plane retardation of said liquid crystal layer of the first or the second subpixel when the pixel is in a minimum-brightness state and larger than an out-of-plane retardation of said liquid crystal layer of the first or the second subpixel when the pixel is in a color-displaying state.

3. A device according to Claim 2, wherein said first phase plate has a retardation in terms of an absolute value smaller than 3/4 of an out-of-plane retardation of said liquid crystal layer of the first or second subpixel when the pixel is in a minimum-brightness state.

4. A device according to Claim 1, wherein said liquid crystal layer includes a liquid crystal molecules of vertical alignment when no external field is applied.

5. A device according to Claim 1, wherein said liquid crystal layer includes a liquid crystal molecules of bend alignment and a second phase plate having an in-plane retardation.

6. A device according to Claim 5, wherein said second phase plate cancels an in-plane retardation of said liquid crystal molecules in a bend alignment state.

7. A device according to Claim 5, wherein said second phase plate cancels an in-plane retardation of said liquid crystal molecules in a vertical alignment state under an voltage application to said electrodes.

8. A device according to Claim 1, wherein said first phase plate is disposed between said polarizer and said first substrate, and said second substrate is provided with a reflection layer for reflecting light incident from outside said first substrate.

9. A device according to Claim 8, wherein said second substrate is further provided with a light transmission layer for permitting transmission of the light incident from outside said first substrate.

10. A device according to Claim 1, wherein said first phase plate is disposed between said polarizer and said first substrate and has an out-of-plane retardation smaller than 3/4 of an out-of-plane retardation of said liquid crystal layer of the first or second subpixel when the pixel is in a minimum-brightness state and another phase plate is disposed outside said second substrate.

11. A device according to Claim 1, wherein the color filter of said second subpixel is a green color filter.

60

61

62

63

64
65
66
67
68

69

FIG.1

**FIG.2**

(a)

(b)

FIG.3

FIG.4

10

TRANSPARENT | G

11 | 12

## FIG.5

20

M | G

21 | 22

## FIG.6

Chromaticity diagram

FIG.7

Chromaticity diagram

FIG.8

FIG.9